# EUROPEAN PATENT SPECIFICATION

(11) **EP 4 362 193 B1**
(45) Date of publication and mention of the grant of the patent: **14.01.2026**
(21) Application number: 22828797.5
(22) Date of filing: 23.06.2022
(51) Int. Cl.: H01M 50/291, H01M 50/213, H01M 50/262

(54) **CELL MODULE ASSEMBLY AND BATTERY PACK INCLUDING SAME**
ZELLMODULANORDNUNG UND BATTERIEPACK DAMIT
ENSEMBLE MODULE D'ÉLÉMENT ET BLOC-BATTERIE LE COMPRENANT

(30) Priority: 24.06.2021 KR 20210082680
(43) Date of publication of application: 01.05.2024
(73) Proprietor: LG Energy Solution, Ltd., Seoul 07335 (KR)
(72) Inventor: LEE, Bum-Jick, Daejeon 34122 (KR); SON, Young-Su, Daejeon 34122 (KR)
(74) Representative: Plasseraud IP
(86) International application number: PCT/KR2022/008968
(87) International publication number: WO 2022/270950

(56) References cited:
- EP-B1- 3 073 546
- WO-A1-2014/132649
- WO-A1-2021/025313
- JP-A- 2000 182 583
- JP-B2- 6 184 987
- KR-A- 20150 076 963
- KR-A- 20170 011 212
- KR-A- 20180 106 688
- KR-A- 20180 129 115
- KR-A- 20180 138 143
- KR-A- 20190 023 917
- US-A1- 2014 322 581
- US-B1- 10 243 184
- US-B1- 6 379 837
- US-B2- 10 153 522

## Description

### TECHNICAL FIELD

The present disclosure relates to a battery pack, and more particularly, to a cell module assembly for reducing the number of cell frames in terms of manufacturing cost and procedural simplicity and preventing the movement of battery cells, thereby minimizing the likelihood of a short occurring and improving the durability, and a battery pack comprising the same.

### BACKGROUND ART

Due to their characteristics of being easily applicable to various products and electrical properties such as high energy density, secondary batteries are not only commonly applied to portable devices, but universally applied to electric vehicles (EVs) or hybrid electric vehicles (HEVs) and electric scooters that are driven by an electrical driving source. Secondary batteries can remarkably reduce the use of fossil fuels. In addition to the primary advantage, another advantage is that they do not generate byproducts from the use of energy. Due to these advantages, secondary batteries are gaining attention as a new eco-friendly and energy efficient source of energy.

The types of secondary batteries widely used at present include lithium ion batteries, lithium polymer batteries, nickel cadmium batteries, nickel hydrogen batteries, nickel zinc batteries or the like. A unit secondary battery cell, i.e., a unit battery cell has an operating voltage of about 2.5V to 4.5V. Accordingly, for example, it is impossible to obtain sufficient output to drive an electric scooter from one secondary battery cell at the present time. To use secondary batteries as an energy source of an electric scooter, for example, it is necessary to form a battery module including a plurality of lithium ion battery cells connected in series and/or in parallel, and in general, a battery pack includes battery modules connected in series and a Battery Management System (BMS), a Battery Disconnection Unit (BDU) and electrical connect components to functionally maintain them.

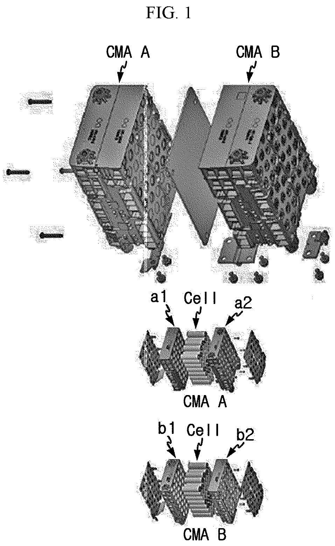

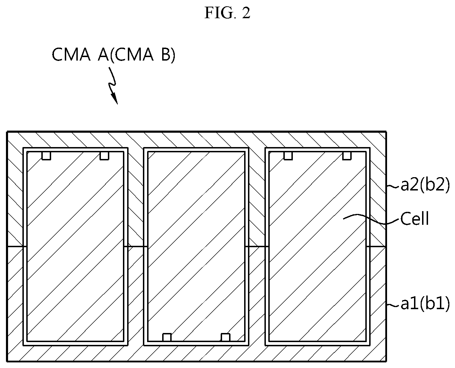

Meanwhile, FIG. 1 is a diagram showing the conventional battery pack including two cell module assemblies CMA A, CMA B. The conventional cell module assembly CMA A includes two cell frames a1,a2 to receive and secure cylindrical battery cells. That is, the conventional cell module assembly CMA A includes the two cell frames a1, a2 assembled to receive and secure the battery cells as shown in FIG. 2. Accordingly, the battery pack including the two cell module assemblies CMA A,CMA B needs four cell frames a1,a2,b1,b2. The conventional battery pack undergoes many assembly processes and has an increase in the number of components and its consequential increase in manufacturing cost.

Documents KR 2018/0138143 A, US 10153522 B2, EP 3073546 B1 and WO 2014/132649 A1 disclose battery cells module assemblies.

### DISCLOSURE

### Technical Problem

The present disclosure is designed to solve the above-described problem, and therefore the present disclosure is directed to providing a cell module assembly in which a single cell frame replaces the conventional two cell frames in terms of manufacturing cost and procedural simplicity, and battery cells are received in the single cell frame without movement and a battery pack comprising the same.

The present disclosure is further directed to providing a cell module assembly with improved electrical safety and heat dissipation and a battery pack comprising the same.

### Technical Solution

To this end, the invention relates to a cell module assembly according to claim 1.

The cell module assembly after the invention may present one or more feature(s) from dependent claims 2 to 12, in any combination allowed by the claims.

The invention also relates to a battery pack after claim 13.

### Advantageous Effects

According to an aspect of the present disclosure, it is possible to provide a cell module assembly in which cylindrical battery cells are received and secured in a single cell frame without contact between the cylindrical battery cells in the single cell frame without movement of the cylindrical battery cells and a battery pack comprising the same.

Additionally, according to another aspect of the present disclosure, it is possible to provide a cell module assembly with improved electrical safety and heat dissipation and a battery pack comprising the same.

Accordingly, the battery pack according to an aspect of the present disclosure may have improved durability and electrical safety against external impacts since the components for electrical connection and the components for voltage/temperature sensing are disposed at the central area inside of the pack case, and achieve effective heat dissipation since the bottom surfaces of all the battery cells are disposed near the walls of the pack case.

The effects of the present disclosure are not limited to the above-mentioned effects, and these and other effects will be clearly understood by those skilled in the art from the present disclosure and the accompanying drawings.

### DESCRIPTION OF DRAWINGS

FIG. 1 is a diagram showing two cell module assemblies (CMAs) included in a battery pack according to the related art.
FIG. 2 is a schematic cross-sectional view of a cell frame included in a cell module assembly according to the related art.
FIG. 3 is a perspective view of a battery pack according to an embodiment of the present disclosure.
FIG. 4 is a partial exploded perspective view of the battery pack of FIG. 3.
FIG. 5 is a perspective view showing two cell module assemblies and a BMS assembly in FIG. 4.
FIG. 6 is a cross-sectional view of a battery pack according to an embodiment of the present disclosure.
FIG. 7 is a perspective view of a first cell module assembly of FIG. 5.
FIG. 8 is a diagram showing a cell frame of the first cell module assembly of FIG. 7.
FIG. 9 is a diagram showing an embodiment in which battery cells are received in the cell frame of FIG. 8.
FIG. 10 is a partial enlarged view of FIG. 9.
FIG. 11 shows images of a difference in gap between battery cells caused by a dimensional tolerance of cell holders of a cell frame according to an embodiment of the present disclosure.
FIG. 12 is a perspective view of a cell spacer according to an embodiment of the present disclosure.
FIG. 13 is a diagram showing the cell spacer of FIG. 12 applied to the embodiment of FIG. 9.
FIG. 14 is a partial cutaway perspective view of FIG. 13 taken along the line A-A'.
FIG. 15 is a diagram showing a thermal transfer member on a bottom surface of a battery can in FIG. 14.
FIG. 16 is a diagram showing an upper plate portion of a cell frame according to an embodiment of the present disclosure.
FIG. 17 is a diagram showing the upper plate portion and parts of a side portion of the cell frame of FIG. 16.
FIG. 18 is a diagram showing the upper plate portion and the side portion of the cell frame of FIG. 17 when viewed at a different angle.
FIG. 19 is a perspective view of a sensing unit of FIG. 18.
FIG. 20 is a side view of the sensing unit of FIG. 19.
FIGS. 21 and 22 are diagrams showing two cell module assemblies before and after assembly according to an embodiment of the present disclosure.
FIG. 23 is a diagram showing an assembly of a BMS assembly and the two cell module assemblies of FIG. 22.

### BEST MODE

Hereinafter, an exemplary embodiment of the present disclosure will be described in detail with reference to the accompanying drawings. Prior to the description, it should be understood that the terms or words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiment described herein and the illustration shown in the drawings is an exemplary embodiment of the present disclosure, but not intended to fully describe the technical aspects of the present disclosure, so it should be understood that a variety of other equivalents and modifications could have been made thereto at the time that the application was filed.

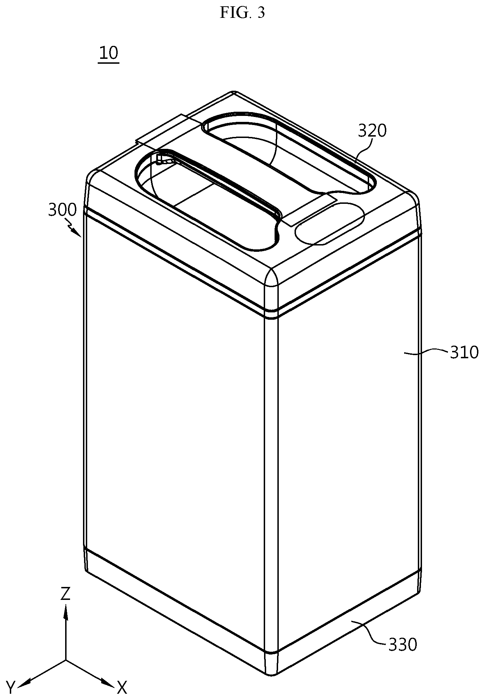

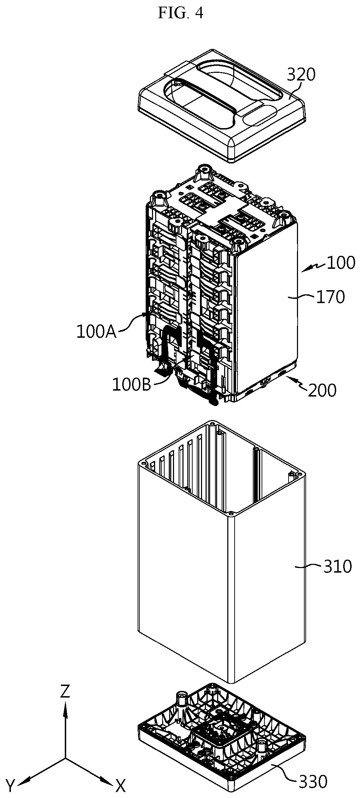

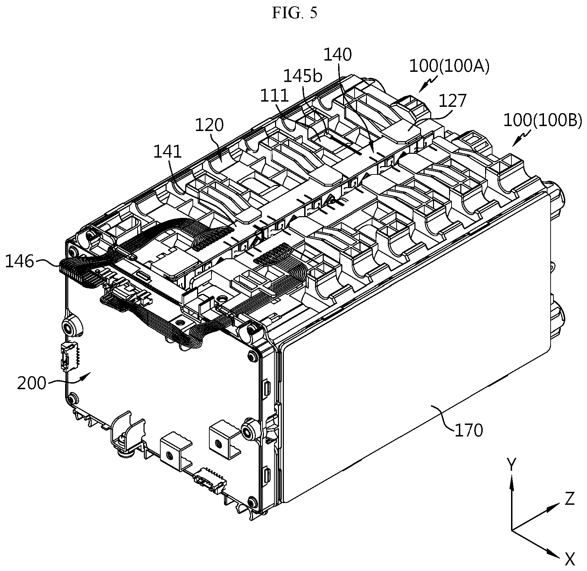

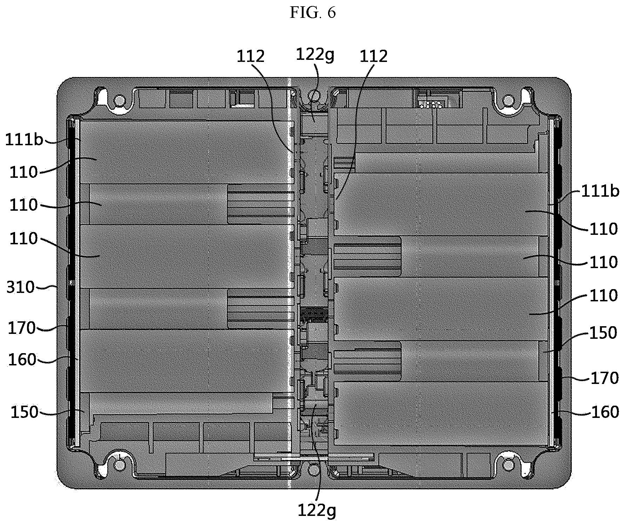

FIG. 3 is a perspective view of a battery pack according to an embodiment of the present disclosure, FIG. 4 is a partial exploded perspective view of the battery pack of FIG. 3, FIG. 5 is a perspective view showing two cell module assemblies and a battery management system (BMS) assembly in FIG. 4, and FIG. 6 is a cross-sectional view of the battery pack according to an embodiment of the present disclosure.

Referring to FIGS. 3 to 6, the battery pack 10 according to an embodiment of the present disclosure includes the cell module assembly 100, the BMS assembly 200 and a pack case 300.

The pack case 300 includes a middle case 310, an upper cover 320 and a lower cover 330. The middle case 310 has such a hollow shape with an open top and an open bottom that the cell module assembly 100 and the BMS assembly 200 coupled to the bottom of the cell module assembly 100 are slidably inserted into the middle case 310 together. The upper cover 320 and the lower cover 330 may be coupled to the open top and the open bottom of the middle case 310, respectively, to cover the top and bottom of the middle case 310. The middle case 310 may be made of a material having high mechanical strength and good heat dissipation performance, for example, a metal such as aluminum (A1) to protect the cell module assembly 100 and the BMS assembly 200 from external impacts.

The battery pack 10 according to an embodiment of the present disclosure may be configured to receive the two cell module assemblies 100 coupled to each other in the pack case 300 as shown in FIG. 5. Each of the two cell module assemblies 100 includes a plurality of battery cells 110. Here, the battery cell 110 may be a cylindrical secondary battery. The cylindrical battery cell 110 may be manufactured by putting an electrolyte solution and an electrode assembly into a cylindrical battery can, placing a top cap 112 at the top opening of the battery can and sealing up the top opening of the battery can by crimping. The cylindrical battery cell 110 may have the electrode assembly wound in jelly-roll shape, the electrode assembly including a positive electrode plate, a negative electrode plate and a separator between the positive electrode plate and the negative electrode plate. A positive electrode tab may be attached to the positive electrode plate, and the positive electrode tab may be connected to the top cap 112. Additionally, a negative electrode tab may be attached to the negative electrode plate, and the negative electrode tab may be connected to the battery can.

Additionally, in the battery pack 10 according to an embodiment of the present disclosure, the two cell module assemblies 100 may be configured such that the top caps 112 of the cylindrical battery cells 110 face each other. Referring to FIGS. 4 to 6, the two cell module assemblies 100 may be configured such that the top cap 112 of each battery cell 110 faces the central area of the battery pack 10 and a bottom surface 111b of the battery can of each battery cell 110 faces the outer area of the battery pack 10. Describing in more detail, the two cell module assemblies 100 may include the first cell module assembly 100A on the left side and the second cell module assembly 100B on the right side in FIG. 5, and as shown in FIG. 6, the first cell module assembly 100A may be disposed such that the top caps 112 of all the cylindrical battery cells 110 included in the first cell module assembly 100A face the right side, and the bottom surfaces 111b of the battery cans face the left side. Additionally, the second cell module assembly 100B may be disposed such that the top caps 112 of all the cylindrical battery cells 110 included in the second cell module assembly 100B face the left side, and the bottom surfaces of the battery cans face the right side.

According to this configuration, the battery pack 10 according to the present disclosure includes the components for electrical connection and the components for voltage/temperature sensing at the central area of the battery pack 10, thereby improving the durability and electrical safety against external impacts. Additionally, the bottom surfaces 111b of all the cylindrical battery cells 110 included in the two cell module assemblies 100A, 100B may be disposed close to the walls of the middle case 310, thereby easily transferring heat from the cylindrical battery cells 110 to the middle case 310. Further, a thermally conductive material or a heat dissipation pad 170 in the space between the bottom surfaces of the cylindrical battery cells 110 and the middle case 310 may contribute to the faster heat transfer from the cylindrical battery cells 110 to the middle case 310. The battery pack 10 according to the present disclosure has a simple and very effective heat dissipation structure of the battery cells 110.

Hereinafter, the cell module assembly 100 according to the present disclosure included in the battery pack 10 will be described in more detail.

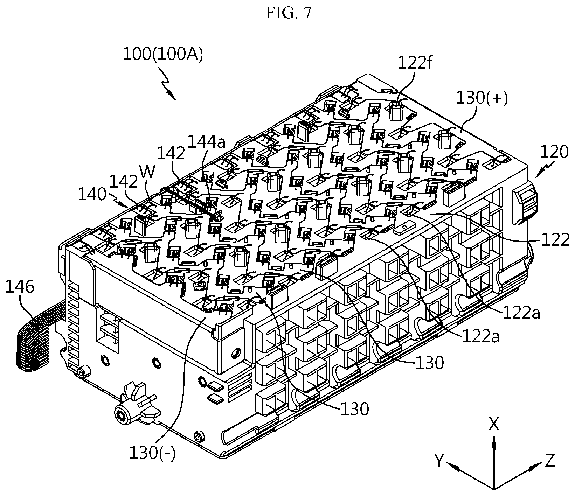

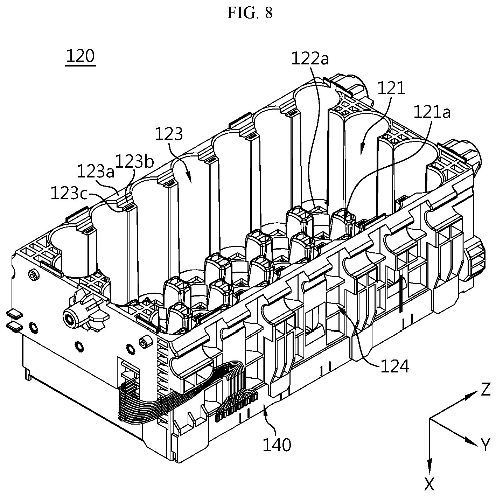

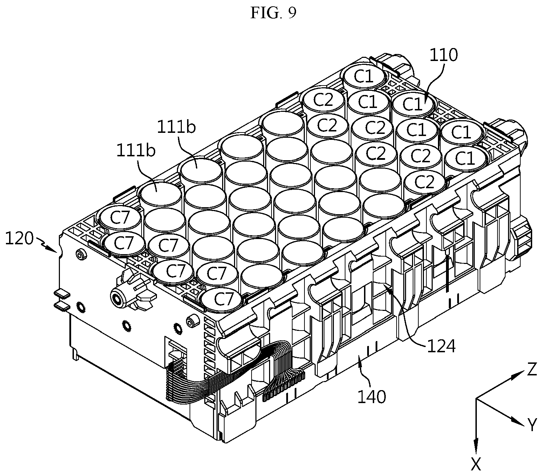

FIG. 7 is a perspective view of the first cell module assembly 100A of FIG. 5, FIG. 8 is a diagram showing a cell frame 120 of the first cell module assembly 100A of FIG. 7, and FIG. 9 is a diagram showing an embodiment in which the battery cells 110 are received in the cell frame 120 of FIG. 8.

The first cell module assembly 100A and the second cell module assembly 100B included in the battery pack 10 of the present disclosure have substantially the same main components, and the description of the main components of the first cell module assembly 100A replaces the description of the second cell module assembly 100B.

Referring to FIGS. 7 to 9, the cell module assembly 100 according to an embodiment of the present disclosure includes the plurality of battery cells 110, the cell frame 120, a busbar plate 130 and a sensing unit 140.

Each of the plurality of battery cells 110 is a cylindrical secondary battery with the top cap 112 coupled to the top portion of the battery can as described above and the plurality of battery cells 110 is received in the cell frame 120 such that all the top portions of the battery cans, i.e., the top caps 112 face the same direction. Each of the battery cells 110 may be arranged upright in the cell frame 120 such that the top portion of the battery can is partially fitted and held in cell holders 121a within the cell frame 120.

The cell frame 120 has a rectangular box shape for receiving the plurality of battery cells 110 upright therein. Compared to the conventional cell frame that is divided into an upper part a1 and a lower part a2 as shown in FIGS. 1 and 2, the cell frame 120 according to the present disclosure has a reduction in manufacturing cost and a simple assembly process of the cell module assembly 100.

Describing with reference to FIGS. 7 and 8 together, the cell frame 120 includes an accommodation portion 121 that forms a space in which the plurality of cylindrical battery cells 110 is received upright, an upper plate portion 122 disposed on the top portion of the battery can, an open portion 123 disposed on the bottom portion of the battery can, and a side portion 124 that forms four sidewalls.

The accommodation portion 121 is the internal space of the cell frame 120 surrounded by the upper plate portion 122 and the side portion 124, and may have a height corresponding to the length (or height) of the battery cells 110. In other words, the cell frame 120 of this embodiment may include four side portions 124 extended to the length of the cylindrical battery cells 110. Accordingly, the distance between the open portion 123 of the cell frame 120 and the upper plate portion 122 of the cell frame 120 may correspond to the length of the cylindrical battery cells.

When the battery cells 110 are arranged upright with the top cap 112 at the bottom as shown in FIG. 9, the upper plate portion 122 of the cell frame refers to one plane surface of the cell frame 120 that supports the battery cells 110 below the top cap 112, and has terminal connection holes 122a. The terminal connection holes 122a may be configured such that the top portions of the battery cans of all the battery cells 110 are partially exposed through the upper plate portion 122 of the cell frame. When all the battery cells 110 are received in the cell frame 120 through the terminal connection holes 122a, the top cap 112 of each battery cell 110 and a top edge 111a of the battery can may be partially exposed through the upper plate portion 122 of the cell frame.

In the cylindrical battery cell 110, the positive electrode tab connected to the electrode assembly is connected to the top cap 112 and the negative electrode tab is connected to the battery can, and thus the top cap 112 acts as a positive terminal of the battery cell 110 and the battery can acts as a negative terminal. (For reference, the cylindrical battery cell covers the battery can with an insulation sheet so that only the bottom surface and/or the top edge of the battery can acts as the negative terminal.) The cylindrical battery cells 110 may be connected in series and/or in parallel with the top cap 112 of each battery cell 110 or the top edge 111a of the battery can connected to the busbar plates 130 on the outer surface of the upper plate portion 122 of the cell frame in a preset pattern. The electrical connection configuration of the battery cells 110 will be described in more detail below.

The open portion 123 of the cell frame is disposed opposite the upper plate portion 122 of the cell frame, and as shown in FIG. 8, the inside of the outer edge portion is open, leaving only the outer edge portion. In the assembly process of inserting the cylindrical battery cell 110 into the cell frame 120, the open portion 123 of the cell frame 120 faces upward and the cylindrical battery cells 110 may be inserted into the cell frame 120 together using a cell insertion jig (not shown).

In this instance, as shown in FIG. 9, when all the cylindrical battery cells 110 are inserted into the cell frame 120 such that the bottom surface 111b of the battery can faces the open portion 123 of the cell frame, the bottom surfaces 111b of all the battery cells 110 may be exposed out of the cell frame 120 through the open portion 123. When the battery cells 110 are received in the cell frame, it is possible to easily transfer heat from the battery cells 110 to the bottom surface 111b of the battery can.

Meanwhile, the cell frame 120 includes the cell holders 121a to hold the battery cells 110. The cell holder 121a may be configured to cover at least part of the top circumference of the battery can.

Specifically, referring to FIG. 8, the cell holder 121a may be configured to protrude from the upper plate portion 122 of the cell frame 120 toward the open portion 123 and cover the top circumference of the battery can to the predetermined height. Additionally, the height or depth of the cell holder 121a may be lower than the middle height of the cylindrical battery cell 110.

When each cylindrical battery cell 110 is fitted into each cell holder 121a, the cylindrical battery cells 110 may be disposed upright and held at a preset position and received in the cell frame 120 as shown in FIG. 9.

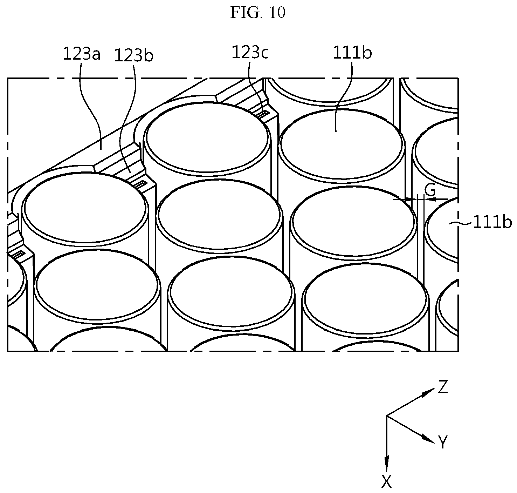

When the cylindrical battery cells 110 are received in the accommodation portion 121 of the cell frame 120, the cylindrical battery cells 110 may have a predetermined gap between the cylindrical battery cells 110 as indicated by 'G' in FIG. 10.

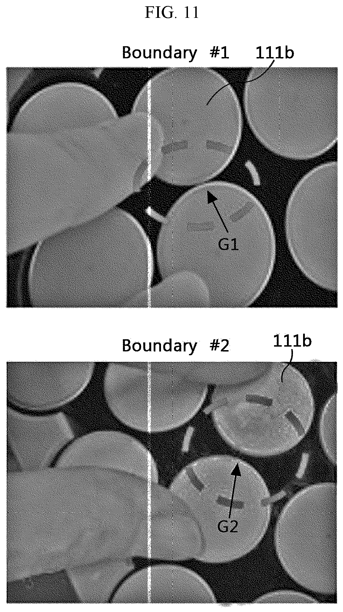

Basically, the cylindrical battery cell 110 is fitted into and held in the cell holder 121a, but for example, in case that the outer diameter of the cylindrical battery cell 110 is smaller than normal one or the inner diameter of the cell holder 121a is larger than normal one, like the boundary #1 in FIG. 11, when a force is applied to two adjacent cylindrical battery cells 110 (with a finger), the gap may become narrower like 'G1' compared to the initial gap (when is not subjected to the force) by the movement of the battery cells. In contrast, in case that both the outer diameter of the cylindrical battery cell 110 and the inner diameter of the cell holder 121a are normal dimensions or the outer diameter of the cylindrical battery cell 110 is larger than the inner diameter of the cell holder 121a but is large enough to couple the cylindrical battery cell 110 to the cell holder 121a by interference fit, like boundary #2 in FIG. 11, when a force is applied to two adjacent cylindrical battery cells 110 (with a finger), although the battery cells 110 tilt, the gap may hardly become narrow like 'G2' or the battery cells 110 may not move.

However, the battery cells 110 included in the cell module assembly 100 have a slight difference in dimensions, and in particular, when an external force (impacts or vibration) is applied, the battery cells corresponding to boundary #1 of FIG. 11 move so much, causing a disconnection at the electrical connection part or an increased short risk.

**[Table 1]**

| Item | Normal design | Cell Frame Min + Cell Max | Cell Frame Max + Cell Min |
|---|---|---|---|
| Outer diameter of cell | 21.07 (Median-Cell PS) | 21.15 (Max-Cell PS) | 20.99 (Min-Cell PS) |
| Inner diameter of cell frame holder | 21.10 (Median) | 21.00 (Min tolerance) | 21.20 (Max tolerance) |
| Inner diameter of cell frame holder | *Gap between cells: 1.0 mm | *Gap between cells: 1.2 mm | *Gap between cells: 0.4 mm |
| | 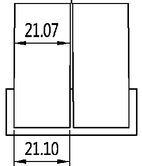 | 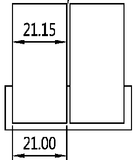 | 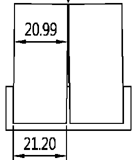 |

In addition, as can be seen from [Table 1], there may be a dimensional tolerance when manufacturing the cylindrical battery cell and the cell frame. The cylindrical battery cell may have the outer diameter of 21.00 mm to 21.15 mm, and the cell holder 121a of the cell frame 120 may have the inner diameter of 21.00 mm to 21.20 mm.

As shown in the second line of the above [Table 1], when the outer diameter of the cylindrical battery cell 110 and the inner diameter of the cell holder 121a have median values, the cylindrical battery cell 110 may be easily inserted into the cell holder 121a and there may be the gap between the cylindrical battery cells 110 of 1.0 mm even when the cylindrical battery cells 110 tilt. As shown in the third line of Table 1, when the outer diameter of the cylindrical battery cell 110 has a maximum value and the inner diameter of the cell holder 121a has a minimum value, the cylindrical battery cell 110 is inserted into the cell holder 121a by interference fit to prevent movement and there may be the gap between the cylindrical battery cells 110 of 1.2 mm. Finally, as shown in the fourth line of Table 1, when the outer diameter of the cylindrical battery cell 110 has a minimum value and the inner diameter of the cell holder 121a has a maximum value, the cylindrical battery cell 110 is inserted into the cell holder 121a the most loosely and may move by even small external impacts, and by this reason, when the battery cells 110 tilt, the gap between the cylindrical battery cells 110 may be reduced to 0.4 mm.

Accordingly, in the cell module assembly 100 including the cylindrical battery cells 110 and the cell holder 121a having the dimensions in the fourth line of Table 1, the cylindrical battery cells 110 may move and tilt in the event of external impacts or vibration, and as a result, there is a high disconnection or short risk of a metal wire W at the electrically connected part (the top portion of the battery can).

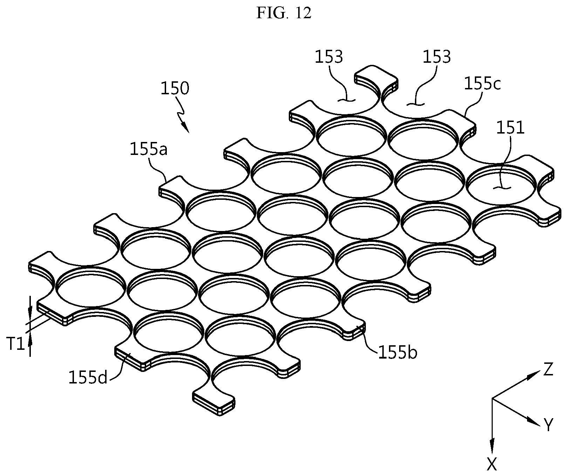

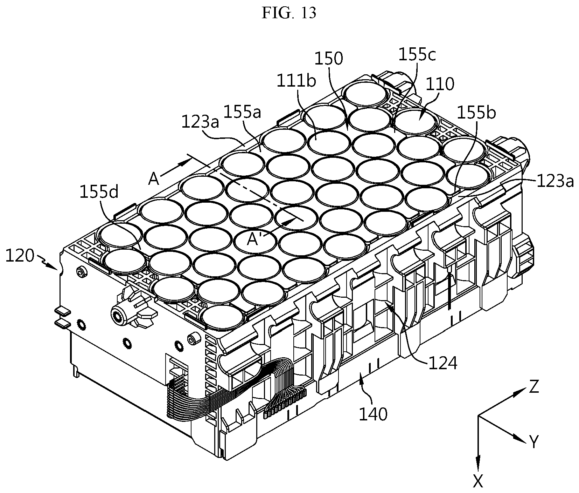

Accordingly, the cell module assembly 100 according to an embodiment of the present disclosure includes a cell spacer 150 as shown in FIGS. 12 and 13. The cell spacer 150 is the component that is coupled to the open portion 123 of the cell frame 120 and is used to cover all or part of the bottom circumference of the battery can to prevent the movement of the battery cells 110 and uniformly maintain the interval between them.

The cell spacer 150 may be in the shape of a plate made of an insulating material, and includes a plurality of spacer holes 151 that covers the bottom circumference of the battery can and a spacer edge portion coupled to the outer edge portion of the open portion 123 of the cell frame 120 by snap fit.

The spacer hole 151 may have a diameter corresponding to the diameter of the battery can, and may surround the bottom circumference of the battery can. Preferably, the spacer hole 151 may have the diameter corresponding to the maximum outer diameter of the cylindrical battery cell 110 in the dimensional (allowable) tolerance range. That is, in this embodiment, the spacer hole 151 may have the diameter that is large enough to surround the bottom circumference of the battery can of the battery cell 110 having the outer diameter of the battery can of 21.15 mm.

As with the embodiment of FIG. 12, the spacer edge portion may include a first edge portion 155a, a second edge portion 155b, a third edge portion 155c and a fourth edge portion 155d, and may be fitted to the outer edge portion of the open portion 123 of the cell frame 120.

As described above, the cell module assembly 100 of this embodiment includes the battery cells 110 disposed upright such that the top portion of the battery can is inserted into the cell holder 121a and held at the preset position and the bottom surface 111b of the battery can faces the open portion 123 of the cell frame (see FIG. 9). The cell spacer 150 is mounted on the bottom portion of the battery cells 110. In this instance, the bottom portion of the battery can of the battery cells 110 may be partially inserted and held in the spacer hole 151 and the bottom surface 111b of the battery can may be exposed to the outside.

Additionally, the cell spacer 150 may further include arc-shaped holes 153 at the edge area, and the arc-shaped holes 153 may be configured to partially surround the bottom circumference of the cylindrical battery cells 110 at the outer periphery of the cell frame 120 to prevent the movement of the cylindrical battery cells 110 at the outer periphery.

Additionally, as with the embodiment of FIG. 13, the first edge portion 155a may be fitted to the left open end of the open portion 123 of the cell frame and the second edge portion 155b may be fitted to the right open end of the open portion 123 of the cell frame and secured to the cell frame 120. In this instance, the third edge portion 155c is disposed in contact with of the bottom portion of the battery cell on the +Z direction outermost side of the cell frame to prevent the +Z direction outermost battery cell 110 from moving in -Z direction, and the fourth edge portion 155d is disposed in contact with the bottom portion of the battery cell 110 on the -Z direction outermost side of the cell frame 120 to prevent the -Z direction outermost battery cell 110 from moving in +Z direction.

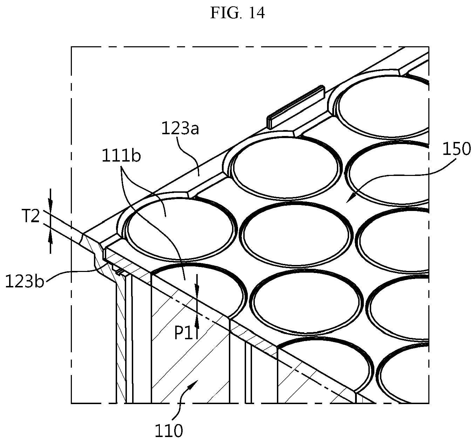

Subsequently, describing the assembly structure of the cell frame 120 and the cell spacer 150 in more detail with reference to FIG. 14, the outer edge portion of the open portion 123 of the cell frame includes a first outer edge portion 123a that is level with the bottom surface 111b of the battery can, and a second outer edge portion 123b that is lower than the first outer edge portion 123a by the thickness T1 of the cell spacer 150 to form a step. When a difference in height between the upper surface of the first outer edge portion 123a and the upper surface of the second outer edge portion 123b is 'T2' in FIG. 14, the T2 may be almost equal to the thickness T1 of the cell spacer 150.

The cell spacer 150 may be fitted to the open portion 123 of the cell frame 120 such that the spacer hole 151 surrounds the bottom circumference of the battery can indicated by 'P1' below the bottom surface 111b of the battery can, and each of the end of the first edge portion 155a and the end of the second edge portion 155b contacts its facing stepped surface of the outer edge portion of the cell frame 120. Additionally, part of the lower surface of the first edge portion 155a may be seated on the left second outer edge portion 123b of the open portion 123 of the cell frame 120, and part of the lower surface of the second edge portion 155b may be seated on the right second outer edge portion 123b of the open portion 123 of the cell frame 120.

As described above, as the cell spacer 150 is applied to the open portion 123 of the cell frame, the top portions of the battery cans of the battery cells 110 are inserted and held in the cell holders 121a and the bottom portions of the battery cans are held by the cell spacer 150. Accordingly, when external impacts or vibration are applied to the cell module assembly 100, it is possible to prevent the battery cells 110 from moving, thereby improving the electrical stability and durability of the cell module assembly 100.

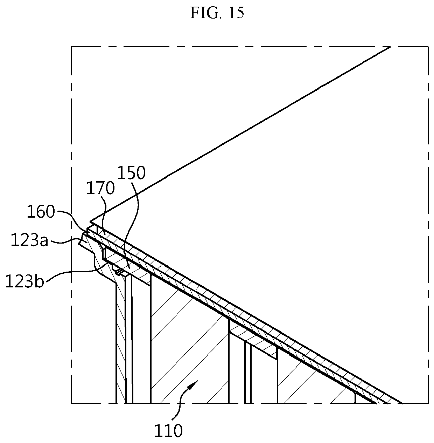

FIG. 15 is a diagram showing a thermal transfer member on the bottom surface of the battery can in FIG. 14

Referring to FIG. 15, the cell module assembly 100 according to an embodiment of the present disclosure may further include a screen plate 160 and a heat dissipation pad 170.

The screen plate 160 is used to support the bottom portions of the battery cells 110 and promote the absorption of heat from the battery cells 110. The screen plate 160 may cover the cell spacer 150 and the bottom surface 111b of the battery can, and may be coupled to the cell frame 120. The screen plate 160 may be a metal plate made of a material having high thermal conductivity, for example, aluminum (Al).

The screen plate 160 and the bottom surface 111b of the battery can may be adhered and secured to each other. According to this configuration, it is possible to improve the contact and thermal conduction between the screen plate 160 and the battery cells 110. For reference, the screen plate 160 and/or the bottom surface 111b of the battery can may be electrically insulated by an insulation film or insulation coating.

Additionally, the heat dissipation pad 170 may be disposed with one surface in contact with the screen plate 160. The heat dissipation pad 170 may be made of a compressible material having high thermal conductivity.

The cell module assembly 100 may include the screen plate 160 and the heat dissipation pad 170 at the open portion 123 of the cell frame 120 as described above, and may be configured such that the heat dissipation pad 170 contacts the middle case 310 when inserted into the pack case 300 as shown in FIG. 6. Accordingly, it is possible to effectively induce heat generated from the battery cells 110 to exit the middle case 310 through the screen plate 160 and the heat dissipation pad 170 from the bottom surface 111b of the battery can, thereby improving the heat dissipation performance of the cell module assembly 100.

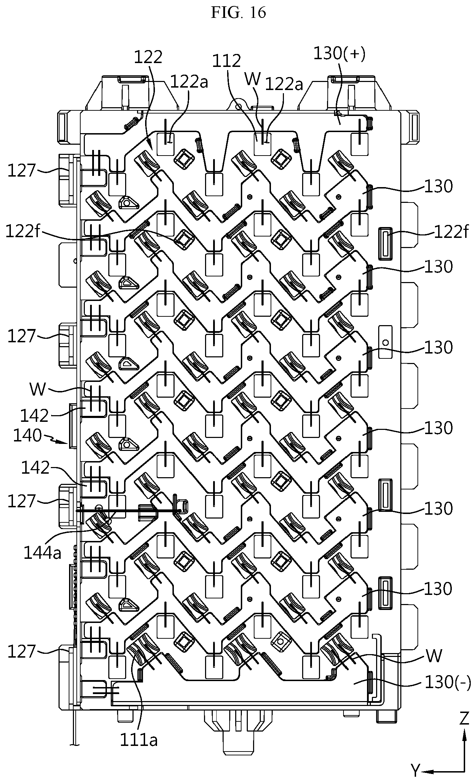

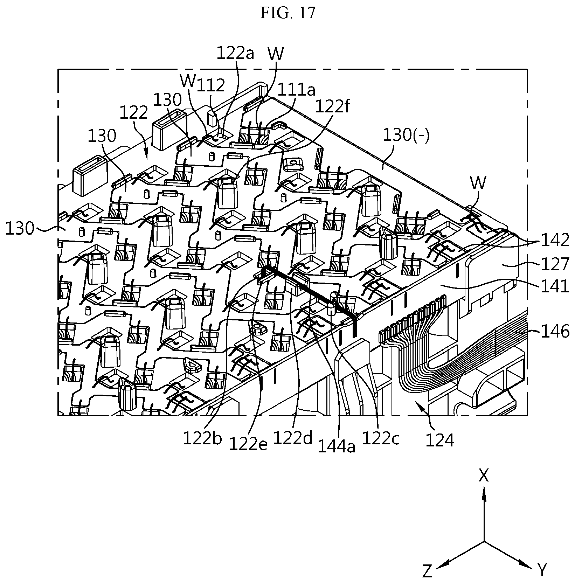

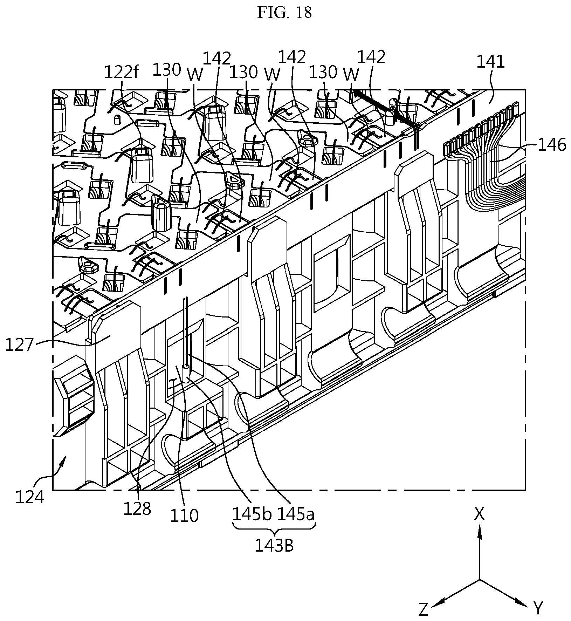

FIG. 16 is a diagram showing the upper plate portion of the cell frame according to an embodiment of the present disclosure. FIG. 17 is a diagram showing the upper plate portion and part of the side portion of the cell frame of FIG. 16, and FIG. 18 is a diagram showing the upper plate portion and the side portion of the cell frame of FIG. 17 when viewed at a different angle.

Subsequently, the electrical connection configuration and voltage/temperature sensing configuration of the battery cells 110 on the upper plate portion 122 and the side portion 124 of the cell frame of the cell module assembly 100 according to an embodiment of the present disclosure will be described with reference to FIGS. 16 to 18.

As shown in FIG. 16, the plurality of busbar plates 130 may be disposed on one outer side of the cell frame 120, in other words, at the upper plate portion 122 of the cell frame. For example, in FIG. 16, the positive busbar plate 130+ may be disposed at the end of +Z direction, the negative busbar plate 130- may be disposed at the end of -Z direction, and the busbar plates 130 may be arranged at a predetermined interval in ±Z direction between the positive busbar plate 130+ and the negative busbar plate 130-. Additionally, the busbar plates 130 may extend in ±Y direction in a linear or zigzag pattern to avoid the position of the terminal connection holes 122a or protrusions 122f in the upper plate portion 122 of the cell frame. The plurality of busbar plates 130 serves to electrically connect the battery cells 110 by wire bonding to the top cap 112 of the battery cells 110 or the top edge 111a of the battery can exposed through the terminal connection holes 122a. Here, the wire bonding refers to compression bonding of each of two ends of the metal wire W to an object by ultrasound. However, the wire bonding may use any other bonding technique, for example, laser welding.

Specifically, in the six battery cells 110 indicated by 'C1' in FIG. 9, the top cap 112 is wire bonded to the positive busbar plate 130+, and the top edge 111a of the battery can is wire bonded to the second busbar plate 130 adjacent to the positive busbar plate 130+ in -Z direction as shown in FIG. 16. Additionally, in the six battery cells 110 indicated by 'C2' in FIG. 9, the top cap 112 is wire bonded to the second busbar plate 130 and the top edge 111a of the battery can is wire bonded to the third busbar plate 130 in -Z direction. When the top caps 112 of the battery cells 110 or the top edges 111a of the battery cans are wire bonded to the corresponding busbar plates 130 in the above-described pattern, and finally, the top edges 111a of the battery cans of the last six battery cells 110 indicated by 'C7' in FIG. 9 are wire bonded to the negative busbar plate 130-, then the battery cells 110 included in the cell module assembly 100 may be connected in series and in parallel in 7S6P configuration. Additionally, the positive busbar plate 130+ may act as the positive terminal of the cell module assembly 100 and the negative busbar plate 130- may act as the negative terminal of the cell module assembly 100.

Referring to FIGS. 17 to 20, the sensing unit 140 according to an embodiment of the present disclosure includes a printed circuit board 141, a plurality of sensing plates 142 and a temperature sensing member 143. Additionally, the sensing unit 140 has electrical connection to the battery cells 110 on the other outer side of the cell frame 120 that intersects the upper plate portion 122 of the cell frame configured as described above and is electrically connected to the busbar plates 130 by wire bonding to sense voltage information the battery cells 110.

The printed circuit board 141 may include a rigid printed circuit board 141 and a flexible printed circuit board 141. The cell module assembly 100 of this embodiment includes the rigid printed circuit board 141 to improve the durability, and the printed circuit board 141 has a circuit pattern to transmit voltage information or temperature information of the battery cells 110. Additionally, the printed circuit board 141 may be configured to be detachably attached to the side portion 124 of the cell frame 120. Describing in more detail, as with the embodiment of FIGS. 17 and 18, the printed circuit board 141 may be disposed at the side portion 124 of the cell frame 120 that intersects the upper plate portion 122 of the cell frame having the busbar plates 130. In this instance, the printed circuit board 141 may be configured such that the plane surface contacts the side portion 124 of the cell frame 120 and the upper corner of the printed circuit board 141 is disposed at the same height as the upper plate portion 122 of the cell frame.

To place the printed circuit board 141 at the side portion 124 of the cell frame 120, the side portion 124 of the cell frame 120 includes substrate holders 127 into which the printed circuit board 141 is inserted to a predetermined depth in parallel to the side portion 124 of the cell frame 120 and configured to support the printed circuit board 141 such that the plane surface of the printed circuit board 141 comes into close contact with the side portion 124 of the cell frame 120.

The substrate holders 127 may be arranged at a predetermined interval along the lengthwise direction (Z direction) of the cell frame 120, and may be disposed at the side portion 124 of the cell frame 120 to avoid interference with a temperature sensing member 143 or a cable connector 146 in the printed circuit board 141.

The plurality of sensing plates 142 is the component that is connected to the busbar plates 130 by wire bonding to sense the voltage for each bank (the battery cells 110 connected in parallel) of the battery cells 110. There may be the number of sensing plates 142 corresponding to the number of busbar plates 130 in a one-to-one relationship, and each sensing plate 142 may be connected to its corresponding busbar plate 130 by wire bonding. The sensing plates 142 may be made of a metal having the electrically conductive properties, for example, nickel, copper (Cu) and silver (Ag).

The plurality of sensing plates 142 may be bent at least once such that one side is secured and coupled to the printed circuit board 141 and the other side is disposed in parallel to the surface of the upper plate portion 122 of the cell frame 120 having the busbar plates 130.

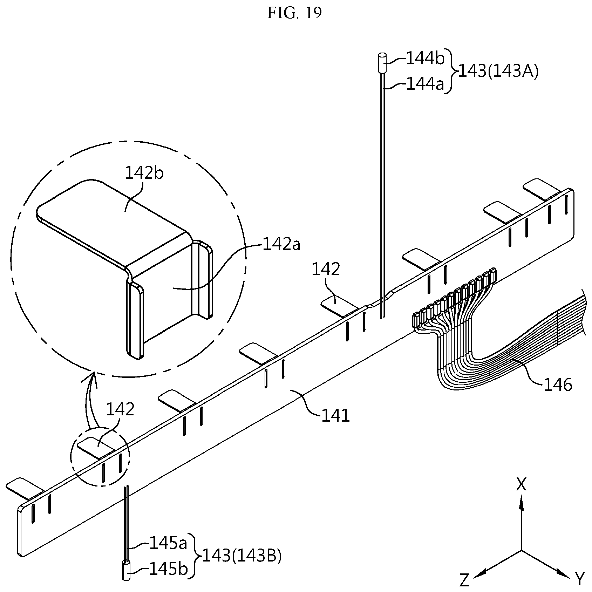

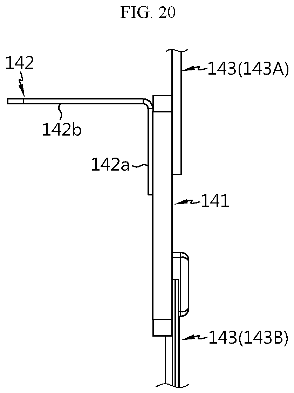

For example, the plurality of sensing plates 142 may be made of an electrically conductive metal in an approximately ' 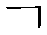 ' or 'L' shape, and as with the embodiment of FIGS. 19 and 20, may be coupled to the printed circuit board 141. Describing in more detail, the sensing plate 142 includes a substrate connection portion 142a that contacts the plane surface of the printed circuit board 141 and a frame seating portion 142b that is bent and extended from the substrate connection portion 142a and disposed in contact with one outer edge of the cell frame 120. According to this configuration, as shown in FIG. 18, when the printed circuit board 141 is inserted into the substrate holders 127 in parallel to the side portion 124 of the cell frame, the frame seating portions 142b of the sensing plates 142 may be disposed in contact with the edge of the upper plate portion 122 of the cell frame.

Additionally, referring to FIGS. 16 to 18, the frame seating portions 142b of the sensing plates 142 may be disposed at the edge of the cell frame 120 in an alternating manner with the ends of the busbar plates 130 on one side. According to the above-described configuration, since the sensing plate 142 may be disposed adjacent to one end of the corresponding busbar plate 130 without interference with the wire bonding area having the connection the battery cells 110 to the busbar plates 130 distributed over the area inside of the edges in the upper plate portion 122 of the cell frame, it is possible to connect the sensing plate 142 to the busbar plate 130 with the metal wire W having the small length. Additionally, the busbar plate 130 and the sensing plate 142 may be connected with two metal wires W. In this case, even in case that one of the two metal wires W is disconnected, it is possible to sense the voltage, thereby improving the voltage sensing reliability and durability.

The metal wire W connecting the battery cell 110 to the busbar plate 130 or the sensing plate 142 to the busbar plate 130 according to this embodiment may be 0.12 mm to 0.8 mm in diameter and 5 mm to 10 mm in length and may be made of aluminum. According to the above-described configuration, the metal wire W may act as a fuse in the event of an external short in the battery pack 10. For example, since the cell module assembly 100 according to this embodiment includes the metal wire W configured as described above, for example, when the electric current of 47.4A or above flows, the metal wires W of the battery cells 110 of at least one bank may be all disconnected to interrupt the flow of current to the cell module assembly 100. It should be noted that the scope of protection of the present disclosure is not limited to the diameter, length and material of the metal wire W. The diameter and length of the metal wire W may be appropriately selected as necessary and the metal wire W may be made of a metal such as copper and nickel.

Meanwhile, as shown in FIG. 19, the temperature sensing member 43 includes two temperature sensing members 143A,143B having different lengths. Among the two temperature sensing members 143A,143B, the temperature sensing member 143 having the larger length is the first temperature sensing member 143A used to measure the temperature at the center of the cell module assembly 100, and the the temperature sensing member 143 having the smaller length is the second temperature sensing member 143B used to measure the temperature at the periphery of the cell module assembly 100.

The first temperature sensing member 143A includes a first cable 144a extended from the printed circuit board 141 by a predetermined length and a first thermistor 144b coupled to the end of the first cable 144a. The second temperature sensing member 143B includes a second cable 145a extended from the printed circuit board 141 by a predetermined length and a second thermistor 145b coupled to the end of the second cable 145a. The first cable 144a is longer than the second cable 145a, and the first cable 144a and the second cable 145a are extended in opposite directions.

The battery pack 10 needs to accurately sense heat generated from the battery cells 110 during charging/discharging and manage the charge/discharge or cool down accordingly. Otherwise, the degradation rate of the battery cells 110 increases and the performance degrades.

Accordingly, for effective heat management of the battery cells 110 included in the cell module assembly 100, it is necessary to accurately detect the temperature of the battery cell 110 having the highest temperature and the temperature of the battery cell 110 having the lowest temperature among the battery cells 110. When the battery cells 110 are received in the cell frame 120 like the cell module assembly 100 of this embodiment, due to the heat island phenomenon at the center, the temperature of the battery cells at the central area within the cell frame is high and the temperature of the battery cells is lower as it goes toward the peripheral area.

Accordingly, the cell module assembly 100 according to an embodiment of the present disclosure may be configured to measure the temperature of the battery cell 110 at the central area where the temperature is highest within the cell frame 120 using the first temperature sensing member 143A. For example, the cell module assembly 100 may include a temperature sensing hole 122b on the surface of the upper plate portion 122 of the cell frame to bring the battery cell 110 having the highest temperature and the first thermistor 144b into contact with each other and insert the first thermistor 144b into the cell frame 120 from the outside of the cell frame 120.

Specifically, referring to FIG. 17, the temperature sensing hole 122b may be disposed at the upper plate portion 122 of the cell frame corresponding to the central area of the cell frame 120, and the first thermistor 144b of the first temperature sensing member 143A is inserted into and disposed in the cell frame 120, to be exact, the accommodation portion 121 of the cell frame 120 through the temperature sensing hole 122b and comes into contact with the outer circumference of the battery cell 110 at the central area of the cell frame 120 to sense the temperature.

In this instance, parts of the first cable 144a of the first temperature sensing member 143A are installed from the edge of the upper plate portion 122 of the cell frame to the position of the temperature sensing hole 122b. In this embodiment, at the upper plate portion 122 of the cell frame may include a plurality of cable guide ribs 122c,122d,122e to install the first cable 144a in a linear shape without needing to bend the first cable 144a from the edge of the upper plate portion 122 of the cell frame to the temperature sensing hole 122b. The plurality of cable guide ribs 122c,122d,122e may protrude on the linear wiring route of the first cable 144a as with the embodiment of FIG. 17. In particular, the plurality of cable guide ribs 122c,122d,122e includes the insertion portion support rib 122e near the circumference of the temperature sensing hole 122b. The insertion portion support rib 122e serves to support the part of the first cable 144a immediately prior to insertion into the temperature sensing hole 122b at a predetermined height apart from the surface of the upper plate portion 122 of the cell frame.

According to the above-described configuration, there is no need to bend the first cable 144a to avoid interference with the top portion of the battery cell 110, the busbar plates 130 or the metal wire W, exposed to the upper plate portion 122 of the cell frame. That is, the first cable 144a may be disposed in a linear shape above the top portion of the battery cell 110 or the busbar plate 130 or the metal wire W, spaced apart from the surface of the upper plate portion 122 of the cell frame by the plurality of cable guide ribs 122c,122d,122e. Additionally, the plurality of cable guide ribs 122c, 122d, 122e keeps the first cable 144a from moving to the left and right, thereby preventing the first thermistor 144b from moving out of its right position.

Meanwhile, the second temperature sensing member 143B may be configured to measure the temperature of one of the battery cells 110 at the peripheral area of the cell module assembly 100.

Describing with reference to FIG. 18, the side portion 124 of the cell frame 120 that intersects the upper plate portion 122 of the cell frame has a side cutout hole 128. The side of the outermost battery cell 110 in the cell frame 120, to be exact, the accommodation portion 121 may be exposed through the side cutout hole 128.

The second cable 145a of the second temperature sensing member 143B may extend from the printed circuit board 141 to the position of the side cutout hole 128, and the second thermistor 145b may contact the side of the battery cell 110 exposed through the side cutout hole 128. In this instance, to stably secure the second thermistor 145b to the side portion of the battery cell 110, a thermally conductive adhesive (not shown) may be used.

According to the above-described configuration, it is possible to measure the temperature of the battery cells 110 at the central area and the battery cells 110 at the peripheral area among the battery cells 110 included in the cell module assembly 100 and assemble the first and second temperature sensing members 143B in a very easy and straightforward manner.

By the above-described voltage sensing and temperature sensing configuration, voltage information and temperature information of the battery cells 110 included in the cell module assembly 100 may be sensed, and the voltage information and the temperature information may be transmitted from the printed circuit board 141 to the BMS assembly 200 through the cable connector 146.

Subsequently, the assembly structure of the two cell module assemblies 100A,100B according to an embodiment of the present disclosure will be described.

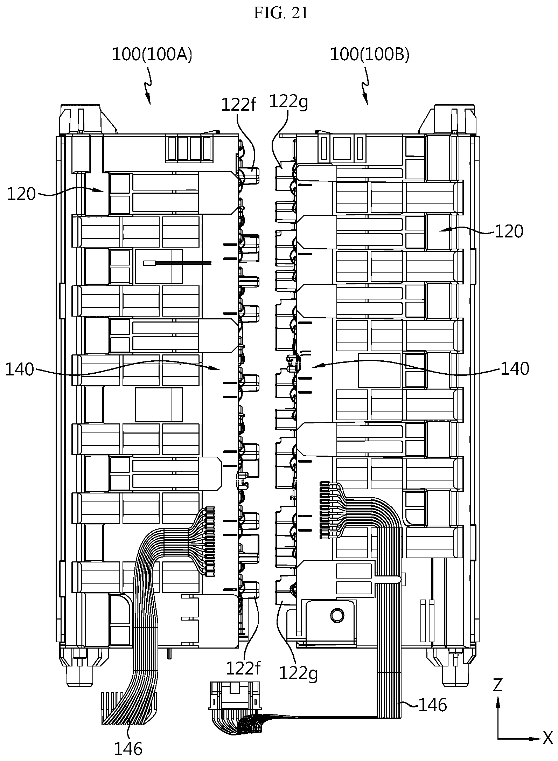

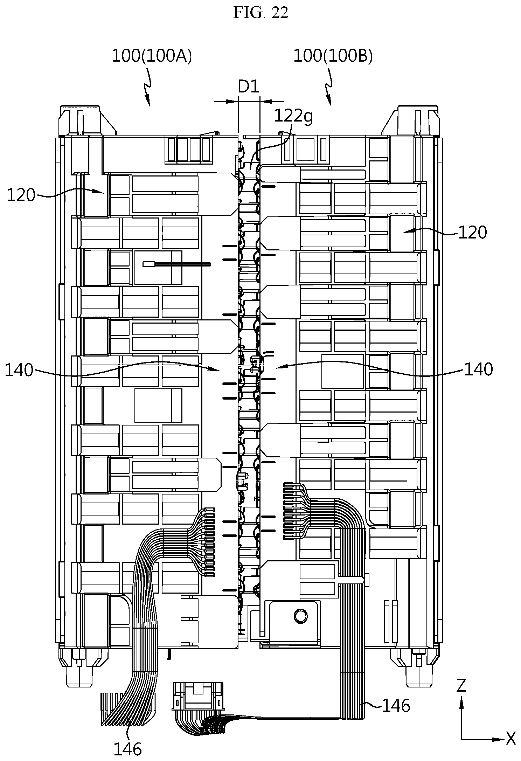

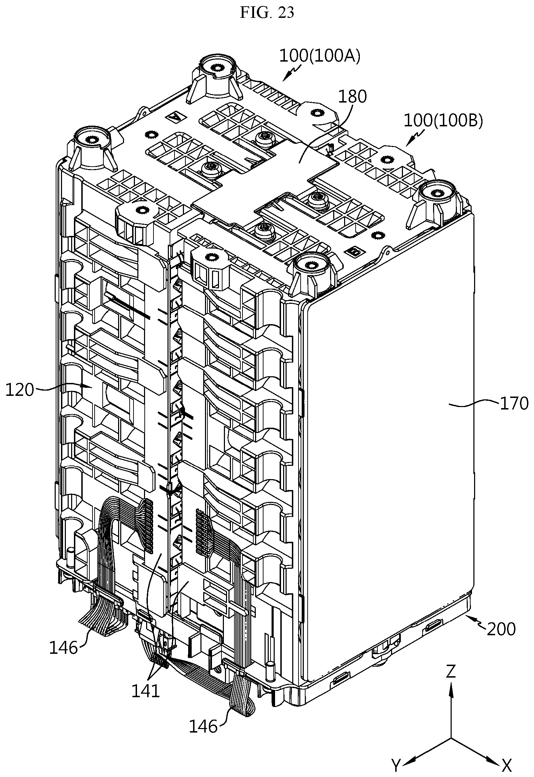

FIGS. 21 and 22 are diagrams showing the two cell module assemblies 100A,100B before and after assembly according to an embodiment of the present disclosure, and FIG. 23 is a diagram showing the assembly of the BMS assembly 200 and the two cell module assemblies of FIG. 22.

As described above, the battery pack 10 according to an embodiment of the present disclosure includes the two cell module assemblies 100.

The two cell module assemblies 100A,100B may be configured such that their cell frames 120 are coupled to each other with the upper plate portions 122 of the cell frames facing each other.

Specifically, referring to FIG. 21, the upper plate portion 122 of any one of the two cell frames 120 may have at least one protrusion 122f that protrudes in the coupling direction, and the upper plate portion 122 of the other cell frame may have at least one gap maintenance column 122g that protrudes in the coupling direction, wherein the protrusion 122f may be inserted into the gap maintenance column 122g. That is, the upper plate portion 122 of the cell frame of the first cell module assembly 100A may have the plurality of protrusions 122f, and the upper plate portion 122 of the cell frame of the second cell module assembly 100B may have the gap maintenance columns 122g in the corresponding number and position to the number and position of the protrusions 122f.

According to this configuration, as shown in FIG. 22, the protrusions 122f of the first cell module assembly 100A may be coupled to the gap maintenance columns 122g of the second cell module assembly 100B by interference fit, and the first cell module assembly 100A and the second cell module assembly 100B may be coupled by the protrusions 122f and the gap maintenance columns 122g coupled as described above without their relative movement while maintaining a regular interval between them as indicated by 'D1' in FIG. 22. Accordingly, the wire bonding area of the upper plate portion 122 of the cell frame of the first cell module assembly 100A and the wire bonding area of the upper plate portion 122 of the cell frame of the second cell module assembly 100B do not contact each other. Additionally, as shown in FIG. 23, the two cell module assemblies 100 physically coupled to each other may be connected in series by an interconnection busbar 180. Here, the interconnection busbar 180 is a metal plate disposed in contact with the positive busbar plate 130+ of the first cell module assembly 100A and the negative busbar plate 130- of the second cell module assembly 100B. Accordingly, the battery cells 110 included in the battery pack 10 according to this embodiment may be connected in series and in parallel in 14S6P configuration.

The two cell module assemblies 100A, 100B may be slidably inserted into the middle case 310 with the BMS assembly 200 coupled to the bottom of the two cell module assemblies 100A, 100B. The upper cover 320 may be coupled to the top of the middle case 310, and the lower cover 330 may be coupled to the bottom of the middle case 310.

By the configuration of the battery pack 10 according to the present disclosure, the top caps 112 of the battery cells 110 included in the first cell module assembly 100A face the central area of the battery pack 10 and the bottoms of the battery cans face the peripheral area of the battery pack 10 (see FIG. 6). Additionally, likewise, the top caps 112 of the battery cells 110 included in the second cell module assembly 100B face the central area of the battery pack 10 and the bottoms of the battery cans face the peripheral area of the battery pack 10.

Accordingly, the components such as the busbar plates 130 for electrical connection or voltage/temperature sensing, the sensing unit 140 and the metal wire W may be disposed at the central area of the pack case 300, thereby improving the durability and electrical safety against external impacts. Additionally, the bottom surfaces of all the cylindrical battery cells 110 included in the two cell module assemblies 100 may be disposed close to the walls of the pack case 300, thereby easily transferring heat from the cylindrical battery cells 110 to the middle case 310.

Meanwhile, the battery pack according to the present disclosure may be used in the transportation applications such as an electric scooter or an electric vehicle. That is, the electric scooter or the electric vehicle according to the present disclosure may include at least one battery pack according to the present disclosure.

The terms indicating directions as used herein such as upper, lower, left and right are used for convenience of description only, and it is obvious to those skilled in the art that the term may change depending on the position of the stated element or an observer.

## Claims

1. A cell module assembly (100), comprising:
a plurality of cylindrical battery cells (110), each including a battery can and a top cap (112) coupled to a top portion of the battery can;
a cell frame (120) having an accommodation portion (121) and an open portion (123) on one side, wherein the plurality of cylindrical battery cells (110) is received upright in the accommodation portion (121);
a cell spacer (150) which surrounds all or part of a bottom circumference of the battery can and is coupled to the open portion (123) of the cell frame (120); and **characterized in that**
a sensing unit (140) disposed on a side portion (124) of the cell frame (120) which intersects an outer side of an upper plate portion (122) of the cell frame (120),
wherein all the cylindrical battery cells (110) are received in the cell frame (120) such that a bottom portion of the battery can facing the open portion (123) of the cell frame (120), and the top portion of the battery can faces an upper plate portion (122) of the cell frame (120) opposite the open portion (123) of the cell frame (120),
wherein the sensing unit includes:
a printed circuit board (141) which is detachably coupled to the cell frame (120); and
a temperature sensing member (143) which is coupled to the printed circuit board (141) to measure a temperature of at least one of the battery cells (110) spaced apart by a predetermined distance,
wherein the temperature sensing member (143) includes a first temperature sensing member (143A) which is inserted, at an end, into the cell frame (120),
wherein the first temperature sensing member (143A) includes a first cable (144a) extended from the printed circuit board (141) by a predetermined length; and a first thermistor (144b) coupled to an end of the first cable (144a),
wherein the first thermistor (144b) is inserted into the accommodation portion (121) through a temperature sensing hole (122b) which penetrates the upper plate portion (122) of the cell frame (120) and contacts the battery cell (110),
the upper plate portion (122) of the cell frame (120) including a plurality of cable guide ribs (122c, 122d, 122e) on a linear wiring route of the first cable (144a) in a linear shape from the printed circuit board (141) to the temperature sensing hole (122b).

2. The cell module assembly according to claim 1, wherein the cell spacer (150) is made of an insulating material, and
wherein the cell spacer (150) has a spacer hole (151) surrounding the bottom circumference of the battery can.

3. The cell module assembly (100) according to claim 2, wherein the spacer hole (151) has a diameter corresponding to a diameter of the battery can.

4. The cell module (100) assembly according to claim 1, wherein the plurality of cylindrical battery cells (100) is arranged upright by support of a cell holder (121a), wherein the cell holder (121a) is disposed in the cell frame (120) and surrounds at least part of a top circumference of the battery can.

5. The cell module assembly (100) according to claim 1, wherein a distance between the open portion (123) of the cell frame (120) and the upper plate portion (122) of the cell frame (120) corresponds to a length of the cylindrical battery cells (110).

6. The cell module assembly (100) according to claim 1, wherein the open portion (123) of the cell frame (200) includes an outer edge portion which forms a circumference,
wherein the outer edge portion includes a first outer edge portion (123a) which is level with a bottom surface (111b) of the battery can, and a second outer edge portion (123b) which is lower than the first outer edge portion (123a) by a thickness of the cell spacer (150) to form a step, and
wherein at least part of edge of the cell spacer (150) is seated on the second outer edge portion (123b).

7. The cell module assembly (100) according to claim 2, wherein the upper plate portion (122) of the cell frame (120) includes terminal connection holes (122a) through which the top portion of the battery can is partially exposed, and
in the cylindrical battery cells (110), the top cap (112) or a top edge of the battery can is exposed through the terminal connection holes (122a), and is wire bonded to a plurality of busbar plates (130) on an outer side of the upper plate portion (122) of the cell frame (120).

8. The cell module assembly (100) according to claim 7, wherein the sensing unit (140) further includes:
a plurality of sensing plates (142) which is coupled to the printed circuit board (141) and wire bonded to the busbar plates (130).

9. The cell module assembly (100) according to claim 8, wherein each of the plurality of sensing plates (142) is bent at least once such that one side is secured and coupled to the printed circuit board (141) and the other side is disposed in parallel to a one outer side of the cell frame (120) having the busbar plates (130).

10. The cell module assembly (100) according to claim 1, wherein the battery cell (110) in contact with the first thermistor (143A) is one of the battery cells at a central area in the cell frame (120).

11. The cell module assembly (100) according to claim 1, wherein the plurality of cable guide ribs (122c, 122d, 122e) includes an insertion portion support rib (122e) to support a part of the cable (144a) immediately prior to insertion into the temperature sensing hole (122b) at a predetermined height apart from the surface of the upper plate portion (122) of the cell frame (120).

12. The cell module assembly (100) according to claim 1, wherein the temperature sensing member (143) includes a second temperature sensing member (143B) having an end extended to a side cutout hole (128) in an outer side of the cell frame (120) which intersects the upper plate portion (122) of the cell frame (120),
wherein the second temperature sensing member (143B) includes a second cable (145a) extended from the printed circuit board (141) by a predetermined length; and a second thermistor (145b) coupled to an end of the second cable (145a), and
wherein the second thermistor (145b) is disposed in contact with a side of an outermost battery cell (110) in the accommodation portion (121) through the side cutout hole (128).

13. A battery pack (10), comprising:
two cell module assemblies (100A, 100B) according to claim 1, wherein the battery cells (110) are received in the cell frame (120) such that the top portion of the battery can faces a same direction, and the cell frames (120) are coupled to each other such that top caps (112) of the battery cells (110) face each other;
a battery management system (BMS) assembly (200) coupled to a side of the two cell module assemblies (100); and
a pack case (300) accommodating the two cell module assemblies (100A, 100B) and the BMS assembly (200) together.

## Patentansprüche

1. Zellenmodulanordnung (100), umfassend:
eine Mehrzahl von zylindrischen Batteriezellen (110), welche jeweils einen Batteriebehälter und eine obere Kappe (112) umfassen, welche mit einem oberen Abschnitt des Batteriebehälters gekoppelt ist;
einen Zellenrahmen (120), welcher einen Aufnahmeabschnitt (121) und an einer Seite einen offenen Abschnitt (123) aufweist, wobei die Mehrzahl von Batteriezellen (110) aufrecht in dem Aufnahmeabschnitt (121) aufgenommen ist;
einen Zellenabstandshalter (150), welcher alles oder einen Teil eines unteren Umfangs des Batteriebehälters umgibt und mit dem offenen Abschnitt (123) des Zellenrahmens (120) gekoppelt ist; und **dadurch gekennzeichnet, dass**
eine Erfassungseinheit (140) an einem seitlichen Abschnitt (124) des Zellenrahmens (120) angeordnet ist, welcher eine äußere Seite eines oberen Plattenabschnitts (122) des Zellenrahmens (120) schneidet,
wobei all die zylindrischen Batteriezellen (110) derart in dem Zellenrahmen (120) aufgenommen sind, dass ein unterer Abschnitt des Batteriebehälters dem offenen Abschnitt (123) des Zellenrahmens (120) zugewandt ist und der obere Abschnitt des Batteriebehälters einem dem offenen Abschnitt (123) des Zellenrahmens (120) entgegengesetzten oberen Plattenabschnitt (122) des Zellenrahmens (120) zugewandt ist,
wobei die Erfassungseinheit umfasst:
eine Leiterplatte (141), welche lösbar mit dem Zellenrahmen (120) gekoppelt ist;
und
ein Temperaturerfassungselement (143), welches mit der Leiterplatte (141) gekoppelt ist, um eine Temperatur wenigstens einer der Batteriezellen (110) zu messen, welche in einem vorbestimmten Abstand voneinander beabstandet sind,
wobei das Temperaturerfassungselement (143) ein erstes Temperaturerfassungselement (143A) umfasst, welches an einem Ende in den Zellenrahmen (120) eingeführt ist,
wobei das erste Temperaturerfassungselement (143A) ein erstes Kabel (144a), welches sich mit einer vorbestimmten Länge von der Leiterplatte (141) erstreckt; und einen ersten Thermistor (144b) umfasst, welcher mit einem Ende des ersten Kabels (144a) gekoppelt ist,
wobei der erste Thermistor (144b) durch ein Temperaturerfassungsloch (122b), welches den oberen Plattenabschnitt (122) des Zellenrahmens (120) durchdringt, in den Aufnahmeabschnitt (121) eingeführt ist und die Batteriezelle (110) kontaktiert,
wobei der obere Plattenabschnitt (122) des Zellenrahmens (120) eine Mehrzahl von Kabelführungsrippen (122c, 122d, 122e) auf einem linearen Verdrahtungsweg des ersten Kabels (144a) in einer linearen Form von der Leiterplatte (141) zu dem Temperaturerfassungsloch (122b) umfasst.

2. Zellenmodulanordnung nach Anspruch 1, wobei der Zellenabstandshalter (150) aus einem isolierenden Material hergestellt ist und
wobei der Zellenabstandshalter (150) ein Abstandshalterloch (151) aufweist, welches den unteren Umfang des Batteriebehälters umgibt.

3. Zellenmodulanordnung (100) nach Anspruch 2, wobei das Abstandshalterloch (151) einen Durchmesser aufweist, welcher einem Durchmesser des Batteriebehälters entspricht.

4. Zellenmodul- (100) Anordnung nach Anspruch 1, wobei die Mehrzahl von zylindrischen Batteriezellen (100) durch eine Unterstützung einer Zellenhalterung (121a) aufrecht angeordnet ist, wobei die Zellenhalterung (121a) in dem Zellenrahmen (120) angeordnet ist und wenigstens einen Teil eines oberen Umfangs des Batteriebehälters umgibt.

5. Zellenmodulanordnung (100) nach Anspruch 1, wobei ein Abstand zwischen dem offenen Abschnitt (123) des Zellenrahmens (120) und dem oberen Plattenabschnitt (122) des Zellenrahmens (120) einer Länge der zylindrischen Batteriezellen (110) entspricht.

6. Zellenmodulanordnung (100) nach Anspruch 1, wobei der offene Abschnitt (123) des Zellenrahmens (200) einen Außenrandabschnitt umfasst, welcher einen Umfang bildet,
wobei der Außenrandabschnitt einen ersten Außenrandabschnitt (123a), welcher auf einem Niveau einer unteren Fläche (111b) des Batteriebehälters liegt, und einen zweiten Außenrandabschnitt (123b) umfasst, welcher um eine Dicke des Zellenabstandshalters (150) niedriger liegt als der erste Außenrandabschnitt (123a), um eine Stufe zu bilden, und
wobei wenigstens ein Teil eines Rands des Zellenabstandshalters (150) an dem zweiten Außenrandabschnitt (123b) anliegt.

7. Zellenmodulanordnung (100) nach Anspruch 2, wobei der obere Plattenabschnitt (122) des Zellenrahmens (120) Anschlussverbindungslöcher (122a) umfasst, durch welche der obere Abschnitt des Batteriebehälters teilweise freigelegt ist, und
in den zylindrischen Batteriezellen (110) die obere Kappe (112) oder ein oberer Rand des Batteriebehälters durch die Anschlussverbindungslöcher (122a) freigelegt ist und an einer äußeren Seite des oberen Plattenabschnitts (122) des Zellenrahmens (120) mit einer Mehrzahl von Sammelschienenplatten (130) verdrahtet ist.

8. Zellenmodulanordnung (100) nach Anspruch 7, wobei die Erfassungseinheit (140) ferner umfasst:
eine Mehrzahl von Erfassungsplatten (142), welche mit der Leiterplatte (141) gekoppelt ist und mit den Sammelschienenplatten (130) verdrahtet ist.

9. Zellenmodulanordnung (100) nach Anspruch 8, wobei jede der Mehrzahl von Erfassungsplatten (142) wenigstens einmal gebogen ist, so dass eine Seite gesichert ist und mit der Leiterplatte (141) gekoppelt ist und die andere Seite parallel zu einer äußeren Seite des Zellenrahmens (120) ist, welche die Sammelschienenplatten (130) aufweist.

10. Zellenmodulanordnung (100) nach Anspruch 1, wobei die Batteriezelle (110), welche mit dem ersten Thermistor (143A) in Kontakt ist, eine der Batteriezellen in einem zentralen Bereich in dem Zellenrahmen (120) ist.

11. Zellenmodulanordnung (100) nach Anspruch 1, wobei die Mehrzahl von Kabelführungsrippen (122c, 122d, 122e) eine Einführungsabschnitthalterungsrippe (122e) umfasst, um einen Teil des Kabels (144a) unmittelbar vor einem Einführen in das Temperaturerfassungsloch (122b) in einer vorbestimmten Höhe entfernt von der Fläche des oberen Plattenabschnitts (122) des Zellenrahmens (120) zu haltern.

12. Zellenmodulanordnung (100) nach Anspruch 1, wobei das Temperaturerfassungselement (143) ein zweites Temperaturerfassungselement (143B) umfasst, welches ein Ende aufweist, das sich zu einem seitlichen ausgeschnittenen Loch (128) in einer äußeren Seite des Zellenrahmens (120) erstreckt, welche den oberen Plattenabschnitt (122) des Zellenrahmens (120) schneidet,
wobei das zweite Temperaturerfassungselement (143B) ein zweites Kabel (145a), welches sich mit einer vorbestimmten Länge von der Leiterplatte (141) erstreckt; und einen zweiten Thermistor (145b) umfasst, welcher mit einem Ende des zweiten Kabels (145a) gekoppelt ist, und
wobei der zweite Thermistor (145B) durch das seitliche ausgeschnittene Loch (128) in Kontakt mit einer Seite einer äußersten Batteriezelle (110) in dem Aufnahmeabschnitt (121) angeordnet ist.

13. Batteriepack (10), umfassend:
zwei Zellenmodulanordnungen (100A, 100B) nach Anspruch 1, wobei die Batteriezellen (110) derart in dem Zellenrahmen (120) aufgenommen sind, dass der obere Abschnitt des Batteriebehälters einer gleichen Richtung zugewandt ist, und die Zellenrahmen (120) derart miteinander gekoppelt sind, dass obere Kappen (112) der Batteriezellen (110) einander zugewandt sind;
eine Batteriemanagementsystem- (BMS) Anordnung (200), welche mit einer Seite der zwei Zellenmodulanordnungen (100) gekoppelt ist; und
ein Packgehäuse (300), welches die zwei Zellenmodulanordnungen (100A, 100B) und die BMS-Anordnung (200) zusammen aufnimmt.

## Revendications

1. Ensemble de module de cellules (100), comprenant :
une pluralité de cellules de batterie cylindriques (110), chacune incluant un boitier de batterie et un capuchon haut (112) couplé à une portion haute du boitier de batterie ;
un cadre de cellule (120) comportant une portion de logement (121) et une portion ouverte (123) sur un côté, dans lequel la pluralité de cellules de batterie cylindriques (110) est reçue verticalement dans la portion de logement (121) ;
une entretoise de cellule (150) qui entoure tout ou partie d'une circonférence basse du boitier de batterie et est couplée à la portion ouverte (123) du cadre de cellule (120) ;
et **caractérisé en ce que**
une unité de captage (140) disposée sur une portion latérale (124) du cadre de cellule (120) qui croise un côté extérieur d'une portion de plaque supérieure (122) du cadre de cellule (120),
dans lequel toutes les cellules de batterie cylindriques (110) sont reçues dans le cadre de cellule (120) de sorte qu'une portion basse du boitier de batterie faire face à la portion ouverte (123) du cadre de cellule (120), et la portion haute du boitier de batterie fait face à une portion de plaque supérieure (122) du cadre de cellule (120),
dans lequel l'unité de captage inclut :
une carte de circuit imprimé (141) qui est couplée de manière détachable au cadre de cellule (120) ; et un organe capteur de température (143) qui est couplé à la carte de circuit imprimé (141) pour mesurer une température d'au moins l'une des cellules de batterie (110) espacées d'une distance prédéterminée,
dans lequel l'organe capteur de température (143) inclut un premier organe capteur de température (143A) qui est inséré, à une extrémité, dans le cadre de cellule (120),
dans lequel le premier organe capteur de température (143A) inclut un premier câble (144a) étendu à partir de la carte de circuit imprimé (141) d'une longueur prédéterminée ; et un premier thermistor (144b) couplé à une extrémité du premier câble (144a),
dans lequel le premier thermistor (144b) est inséré dans la portion de logement (121) à travers un trou capteur de température (122b) qui pénètre dans la portion de plaque supérieure (122) du cadre de cellule (120) et entre en contact avec la cellule de batterie (110),
la portion de plaque supérieure (122) du cadre de cellule (120) incluant une pluralité de nervures de guidage de câble (122c, 122d, 122e) sur un chemin de câblage linéaire du premier câble (144a) de forme linéaire depuis la carte de circuit imprimé (141) jusqu'au trou capteur de température (122b).

2. Ensemble de module de cellules selon la revendication 1, dans lequel l'entretoise de cellule (150) est constituée d'un matériau isolant, et
dans lequel l'entretoise de cellule (150) comporte un trou d'entretoise (151) entourant la circonférence basse du boitier de batterie.

3. Ensemble de module de cellules (100) selon la revendication 2, dans lequel le trou d'entretoise (151) a un diamètre correspondant à un diamètre du boitier de batterie.

4. Ensemble de module de cellules (100) selon la revendication 1, dans lequel la pluralité de cellules de batterie cylindriques (100) est agencée verticalement par support d'un porte-cellule (121a), dans lequel le porte-cellule (121a) est disposé dans le cadre de cellule (120) et entoure au moins une partie d'une circonférence haute du boitier de batterie.

5. Ensemble de module de cellules (100) selon la revendication 1, dans lequel une distance entre la portion ouverte (123) du cadre de cellule (120) et la portion de plaque supérieure (122) du cadre de cellule (120) correspond à une longueur des cellules de batterie cylindriques (110).

6. Ensemble de module de cellules (100) selon la revendication 1, dans lequel la portion ouverte (123) du cadre de cellule (200) inclut une portion de bord externe qui forme une circonférence,
dans lequel la portion de bord externe inclut une première portion de bord externe (123a) qui est au niveau d'une surface basse (111b) du boitier de batterie, et une deuxième portion de bord externe (123b) qui est plus basse que la première portion de bord externe (123a) d'une épaisseur de l'entretoise de cellule (150) pour former une marche, et
dans lequel au moins une partie du bord de l'entretoise de cellule (150) est assise sur la deuxième portion de bord externe (123b).

7. Ensemble de module de cellules (100) selon la revendication 2, dans lequel la portion de plaque supérieure (122) du cadre de cellule (120) inclut des trous de connexion de borne (122a) à travers lesquels la portion haute du boitier de batterie peut être partiellement exposée, et
dans les cellules de batterie cylindriques (110), le capuchon haut (112) ou un bord haut du boitier de batterie est exposé à travers les trous de connexion de borne (122a), et est relié par fil à plusieurs plaques de barre omnibus (130) sur un côté externe de la portion de plaque supérieure (122) du cadre de cellule (120).

8. Ensemble de module de cellules (100) selon la revendication 7, dans lequel l'unité de captage (140) inclut en outre :
une pluralité de plaques de captage (142) qui sont couplées à la carte de circuit imprimé (141) et reliées par fil aux plaques de barre omnibus (130).

9. Ensemble de module de cellules (100) selon la revendication 8, dans lequel chacune de la pluralité de plaques de captage (142) est pliée au moins une fois de sorte qu'un côté est fixé et couplé à la carte de circuit imprimé (141) et que l'autre côté est disposé parallèlement à un côté externe du cadre de cellule (120) comportant les plaques de barre omnibus (130).

10. Ensemble de module de cellules (100) selon la revendication 1, dans lequel la cellule de batterie (110) en contact avec le premier thermistor (143A) est l'une des cellules de batterie au niveau d'une zone centrale dans le cadre de cellule (120).

11. Ensemble de module de cellules (100) selon la revendication 1, dans lequel la pluralité de nervures de guidage de câble (122c, 122d, 122e) inclut une nervure de support de portion d'insertion (122e) pour supporter une partie du câble (144a) immédiatement avant l'insertion dans le trou capteur de température (122b) à une hauteur prédéterminée à l'écart de la surface de la portion de plaque supérieure (122) du cadre de cellule (120).

12. Ensemble de module de cellules (100) selon la revendication 1, dans lequel l'organe capteur de température (143) inclut un deuxième organe capteur de température (143B) ayant une extrémité étendue vers un trou de découpe latéral (128) dans un côté externe du cadre de cellule 120) qui croise la portion de plaque supérieure (122) du cadre de cellule (120),
dans lequel le deuxième organe capteur de température (143B) inclut un deuxième câble (145a) étendu à partir de la carte de circuit imprimé (141) d'une longueur prédéterminée ; et un deuxième thermistor (145b) couplé à une extrémité du deuxième câble (145a), et
dans lequel le deuxième thermistor (145b) est disposé en contact avec un côté d'une cellule de batterie la plus externe (110) dans la portion de logement (121) à travers le trou de découpe latéral (128).

13. Bloc-batterie (10), comprenant :
deux ensembles de module de cellules (100A, 100B) selon la revendication 1, dans lequel les cellules de batterie (110) sont reçues dans le cadre de cellules (120) de sorte que la portion haute du boitier de batterie fait face dans une même direction, et les cadres de cellule (120) sont couplés entre eux de sorte que des capuchons hauts (112) des cellules de batterie (110) se font face ;
un ensemble de système de gestion de batterie (BMS) (200) couplé à un côté des deux ensembles de module de cellules (100) ; et
un boîtier de bloc (300) logeant conjointement les deux ensembles de module de cellules (100A, 100B) et l'ensemble BMS (200).
